# EUROPÄISCHE PATENTSCHRIFT

(11) **EP 1 025 365 B1**
(45) Veröffentlichungstag und Bekanntmachung des Hinweises auf die Patenterteilung: **13.03.2002**
(21) Anmeldenummer: 98961042.3
(22) Anmeldetag: 20.10.1998
(51) Int. Cl.: F15B 15/14, H02K 41/02

(54) **LINEARMODUL**
LINEAR MODULE
MODULE LINEAIRE

(30) Priorität: 30.10.1997 DE 29719212 U; 01.07.1998 DE 19829318
(43) Veröffentlichungstag der Anmeldung: 09.08.2000
(73) Patentinhaber: H + K GmbH Sondermaschinen-Automaten, 63755 Alzenau-Albstadt (DE)
(72) Erfinder: HAMMER, Franz, D-63755 Alzenau-Albstadt (DE)
(74) Vertreter: Pöhner, Wilfried Anton, Dr.
(86) Internationale Anmeldenummer: DE9803126
(87) Internationale Veröffentlichungsnummer: WO9923388

(56) Entgegenhaltungen:
- EP-A- 0 472 778
- EP-A- 0 670 427
- FR-A- 2 535 416
- FR-A- 2 600 384
- US-A- 3 911 790

## Beschreibung

Die Erfindung bezieht sich auf ein Linearmodul, bestehend aus einem als Vierkantrohr ausgebildeten Führungsrohr und einem darin koaxial beweglich angeordneten, ebenfalls als Vierkantrohr ausgebildeten zweiten Rohr,. wobei das innere Vierkantrohr mit einem linearwirkenden Motor verbunden ist, der auf das innere Rohr koaxial zur gemeinsamen Achse der beiden Rohre wirkende Kräfte ausübt, das innere, sich bewegende Rohr auf dem äußeren Führungsrohr gelagert ist, zur Einstellung der Lager die Führungsschienen der Lager räumlich justierbar befestigt sind.

Linearmodule sind ein unentbehrliches Werkzeug moderner automatischer Handhabungstechnologie, die im Rahmen einer wirtschaftlichen Fertigungs- und Montageautomation unentbehrlich ist.
Linearmodule führen im Rahmen dieser Handhabungstechnik lineare Bewegungen aus. Sie können in Kombinationen rechtwinklig zueinander angeordnet werden, wodurch auch nichtlineare Bewegungen am Ende des äußeren Linearmoduls erreichbar sind.

Die bisher bekannten Linearmodule beruhen auf zwei oder mehr parallel zueinander angeordneten Führungsstangen, und einem ebenfalls parallel hierzu angeordneten linearwirkenden Motor im allgemeinen Sinne, in der Regel mit pneumatischem oder elektrischem Antrieb.

Um stets, d.h. auch in den beiden extremen äußeren Positionen,eine Führung an beiden Enden zu garantieren, müssen die beiden Führungsstangen an beiden Enden mehr oder weniger weit überstehen. Dies ergibt einen sperrigen Aufbau. Bei Belastung senkrecht zu der durch die beiden Führungsschienen gebildeten Ebenen treten rasch Instabilitäten auf; es können daher nur geringe Kräfte aufgenommen werden. In Richtung der durch die Führungsschiene gebildete Ebenen sind hingegen große Kräfte aufnehmbar. Aus der FR-A 2 535 416 ist ein Teleskoparm bestehen aus zwei ineinanderschiebbaren Elementen offenbart. Die Elemente weisen einen rechteckigen Querschnitt auf, einen Antrieb zur relativen Verstellung beider Elemente gegeneinander und zwischen äußerem und innerem Element sind einstellbare Führungsschienen für die Lagerkörper vorgesehen.

Die Nachteile der Linearmodule im Stand der Technik bestehend zum einen darin, daß senkrecht zu der durch die beiden Führungsstangen gebildeten Ebene keine großen Kräfte aufgenommen werden, zum anderen darin, daß der Linearmotor - in der Regel der Zylinder - nicht austauschbar ist, da der Zylinder in den Führungskörper für die Führungsstangen integriert ist. Hier will die Erfindung Abhilfe schaffen.

Die Erfindung, wie sie in den Patentansprüchen gekennzeichnet ist, löst die Aufgabe, ein Linearmodul zu aufzuzeigen, das einerseits in der Lage ist in allen Ebenen relativ hohe Kräfte aufzunehmen, andererseits eine Austauschbarkeit des Antriebselementes gewährleistet.

Gelöst wird diese Aufgabe erfindungsgemäß dadurch, daß sich im Inneren des bewegten Rohres oder des Führungsrohres Sensoren (Weggeber) befinden, über die die relativ-koaxiale Position der Rohre an eine Steuereinheit gemeldet und/oder von dieser Steuereinheit abfragbar ist, der Motor, insbesondere der Zylinder, am einen Ende starr mit einem Halter verbunden ist, der drehgesichert und relativ zum Gehäuse axial verstellbar ist, und der Halter im Bereich des Gehäuses von einer Buchse umgeben ist, die mit einem Außen- und einem Innengewinde gleichen Drehsinns, jedoch unterschiedlicher Steigung versehen ist und einerseits mit dem Halter und andererseits mit dem Gehäuse zusammenarbeitet.

Die durch die Erfindung erreichten Vorteile sind im wesentlichen darin zu sehen, daß das beschriebene Linearmodul mit hydraulischem Antrieb versehen für schwere Lasten geeignet ist, der Antrieb durch integrierte Normzylinder erfolgen kann, der Aufbau durch die Beschränkung auf ein Führungsrohr und ein bewegtes Rohr weniger sperrig und für Hydraulik bis 100 bar und für große Hübe geeignet ist. Zur Minimierung von Verlusten wird zwischen dem inneren, sich bewegenden Rohr und dem Führungsrohr einer Lagerung als vorteilhaft angesehen. Zur Justierung ist dann von Vorteil, wenn die Lager nachträglich einstellbar sind. Hierzu werden die die Wälzkörper aufnehmenden Führungsschienen in ihrer räumlichen Position geändert und an den optimalen Zustand angepaßt. Um jede beliebige Position ansteuerbar zu machen, wird die Verwendung von Sensoren (Weggeber) im Inneren des bewegten Rohres oder des Führungsrohres vorgeschlagen. Sie erlauben es, daß die relative koaxiale Position der beiden Rohre zueinander erfaßt und angezeigt werden kann. Die Weggeber erlauben somit eine definierte Verstellung - also einen Hub - von definierter Länge vorzunehmen, ohne daß mehrere linearwirkende Motore koaxial hintereinander eingesetzt werden müssen. Zudem ist der Verschiebeweg nachträglich problemlos zu verändern. Somit lassen sich bei Verwendung eines einzigen Motors durch den Einbau von Weggebern vordefinierte Hübe erzeugen, um somit jede gewünschte Position anzufahren.

Zur vorteilhaften Verstellung des Motores bzw. des Zylinders wird eine Anordnung empfohlen, bei der Motor bzw. Zylinder an einem Ende starr mit einem Halter verbunden sind, dieser im Gehäuse axial und relativ hierzu verstellbar ist. Eine Drehsicherung trägt Sorge dafür, daß der Zylinder keine Drehbewegung ausführt. Der Halter kann hierbei sowohl direkt als auch indirekt von außen betätigbar sein. Ziel dieser Maßnahme der koaxialen Verstellung ist auch nach dem Einbau eine Justierung des Linearmodules in axiale Richtung und damit eine Anpassung an die konkreten Gegebenheiten vornehmen zu können. In einer zweckmäßigen Weiterbildung ist der Halter im Bereich des Gehäuses von einer Buchse umgeben, die nach außen mit dem Gehäuse und nach innen mit dem Halter zusammenarbeitet. Entscheidend ist, daß die Buchse mit einem Außen- und einem Innengewinde gleichen Drehsinnes jedoch unterschiedlicher Steigung versehen ist. Diese Anordnung erlaubt eine Feinjustierung, also eine präzise nachträgliche Einstellung und Justierung.

Der Hauptvorteil der Erfindung liegt jedoch in der Ausbildung des im Inneren beweglichen Rohres und äußeren Führungsrohr als Vierkantrohr, wodurch eine Verdrehung der Rohre gegeneinander nicht möglich ist. Dadurch wird die nahezu gleichmäßige Belastbarkeit in allen Ebenen erreicht.

Besonders bevorzugt ist, als linearwirkenden Motor einen Zylinder zu verwenden. Er ist so anzuordnen, daß er koaxial arbeitet und zwischen den inneren koaxial beweglichen zweiten Rohr und dem Führungsrohr eine Relativbewegung erzeugt. Aufgrund der koaxialen Ausrichtung wird der Zylinder einerseits an dem Führungsrohr zugewandten äußeren Ende des koaxial beweglichen angeordneten zweiten Rohres und andererseits an der gegenüberliegenden Abschlußplatte des Führungsrohres abgestützt werden. Der Antrieb des Zylinders ist hierbei in weiten Grenzen beliebig und kann hydraulisch oder pneumatisch oder elektromechanisch erfolgen.

Ist die Befestigung des linearwirkenden inneren Motors - der in der Regel ein Zylinder sein wird - am äußeren Führungsrohr oder am inneren beweglichen Rohr koaxial verschiebbar und kraftschlüssig feststellbar angeordnet, ist eine Verstellung der Bewegung des Hubes von außen möglich.

Grundsätzlich besteht die Möglichkeit, den vorgeschlagenen Halter an jeder der beiden Stirnflächen von Motor bzw. Zylinder anzubringen. Die Befestigung am äußeren Ende, also zum Innenrohr hin, ist aus räumlichen Gründen aufgrund der Anbringung der Werkzeuge wenig vorteilhaft. Es wird statt dessen vorgeschlagen, den Halter im Bereich des raumfesten Führungsrohres und damit an der äußeren Stirnseite anzubringen, so daß von dort aus die Justierung erfolgt.

Durch die in einer Ausführungsform beschriebenen Anordnung von mehreren derartigen Linearmotoren, im speziellen Zylindern, hintereinander, können zudem variable, jedoch vordefinierte Bewegungswege, erreicht werden. Durch sukzessives Ansteuern der einzelnen Motore werden unterschiedliche Positionen anfahrbar. Jeder Motor hat im allgemeinen nur zwei definierte Positionen, nämlich zum einen den eingefahrenen und zum anderen den vollständig ausgefahrenen Zustand. Werden mehrere Motore koaxial hintereinander geschaltet und sind die einzelnen Motore individuell ansteuerbar, lassen sich mehrere Positionen in Abhängigkeit von der Kombination der jeweiligen Motore ansteuern. Somit lassen sich im allgemeinsten Fall bei N koaxial hintereinander angeordneten Motoren N+1 unterschiedliche Ebenen anfahren. Diese Überlegungen gelten gleichermaßen für den bevorzugten Fall, in dem als linearwirkende Motoren Zylinder Verwendung finden. Die bisherigen Ausführungen gelten für Anordnungen ohne Wegmesser. Um jede beliebige Position ansteuerbar zu machen, wird die Verwendung von Sensoren (Weggebar) im Inneren des bewegten Rohres oder des Führungsrohres vorgeschlagen. Sie erlauben es, daß die relative koaxiale Position der beiden Rohre zueinander erfaßt und angezeigt werden kann. Die Weggeber erlauben somit eine definierte Verstellung - also einen Hub - von definierter Länge vorzunehmen, ohne daß mehrere linearwirkende Motore koaxial hintereinander eingesetzt werden müssen. Zudem ist der Verschiebeweg nachträglich problemlos zu verändern. Somit lassen sich bei Verwendung eines einzigen Motors durch den Einbau von Weggebern vordefinierte Hübe erzeugen, um somit jede gewünschte Position anzufahren.

Im folgenden wird die Erfindung anhand von lediglich eine Ausführungsform darstellenden Zeichnungen näher erläutert. Es zeigen in schematisch gehaltener Darstellung:
- Figur 1: ein erfindungsgemäßes Linearmodul in Längsschnittdarstellung
- Figur 2: ein Linearmodul im Querschnitt
- Figur 3: eine Ausführungsform mit mehreren Linearmotoren
- Figur 4: im Inneren des äußeren Führungsrohres angeordneten Weggebern

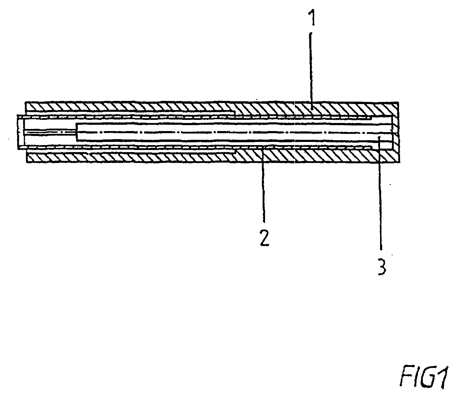

Figur 1 zeigt in Längsschnittdarstellung ein erfindungsgemäßes Linearmodul mit äußerem Führungsrohr (1), das als Vierkantrohr ausgebildet ist, dem inneren beweglichen Rohr (2), das ebenfalls als Vierkantrohr ausgebildet ist und den im Inneren der beiden Rohre angeordneten linearwirkenden Motor (3), der die koaxiale Bewegung des inneren beweglichen Rohres (2) im Verhältnis zu dem äußeren Führungsrohr (1) ermöglicht.

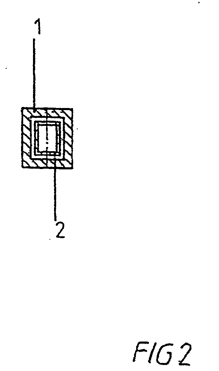

Figur 2 zeigt ein erfindungsgemäßes Linearmodul im Querschnitt mit als Vierkantrohr ausgebildetem äußeren Führungsrohr (1) und koaxial hierzu angeordnetem inneren beweglichen Rohr (2), das ebenfalls als Vierkantrohr ausgebildet ist.

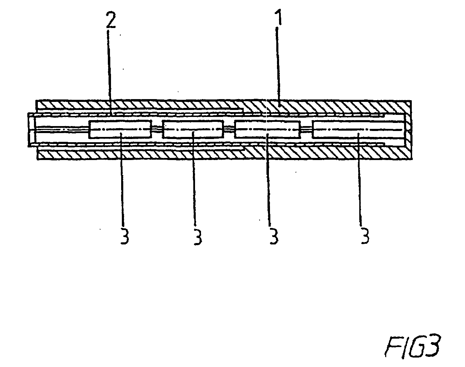

Figur 3 zeigt ebenfalls eine Ausführungsform der Erfindung, bei dem mehrere Linearmotore - hier Hydraulikzylinder (3) - hintereinander angeordnet sind und durch gleichzeitige bzw. aufeinanderfolgende Druckbeaufschlagung eines Teiles oder aller Hydraulikzylinder (3) ein vordefinierter Bewegungsweg erreicht werden kann, der zudem durch die Ansteuerung flexibel gestaltet werden mag.

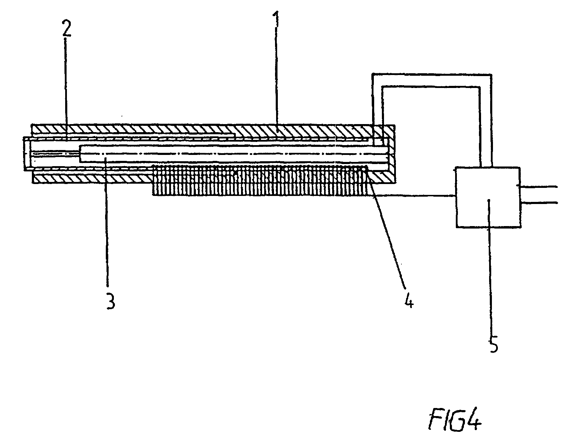

Figur 4 wiederum zeigt eine weitere Ausführung der Erfindung, bei dem im Inneren des äußeren Führungsrohres (1) Weggeber (4) angeordnet sind, die entsprechende Informationen über die relative Position von Führungsrohr (1) und innerem bewegten Rohr (2) an eine Regeleinheit (5) weitergeben, die wiederum die Beaufschlagung des hier als Hydraulikzylinder ausgeführten Linearmotors (3) mit Hydraulikdruck steuert, wodurch vordefinierte bzw. steuerbare Bewegungswege - d. h. Hübe - des Linearmoduls möglich werden.

## Patentansprüche

1. Linearmodul, bestehend aus einem als Vierkantrohr ausgebildeten Führungsrohr (1) und einem darin koaxial beweglich angeordneten, ebenfalls als Vierkantrohr ausgebildeten zweiten Rohr (2), wobei das innere Vierkantrohr (2) mit einem linearwirkenden Motor (3) verbunden ist, der auf das innere Rohr (2) koaxial zur gemeinsamen Achse der beiden Rohre (1,2) wirkende Kräfte ausübt, das innere, sich bewegende Rohr (2) auf dem äußeren Führungsrohr (1) gelagert ist, zur Einstellung der Lager die Führungsschienen der Lager räumlich justierbar befestigt sind, **dadurch gekennzeichnet, daß**
- sich im Inneren des bewegten Rohres (2) oder des Führungsrohres (1) Sensoren (Weggeber) befinden (4), über die die relativ-koaxiale Position der Rohre (1, 2) an eine Steuereinheit (5) gemeldet und/oder von dieser Steuereinheit (5) abfragbar ist,
- der Motor, insbesondere der Zylinder (3), am einen Ende starr mit einem Halter verbunden ist, der drehgesichert und relativ zum Gehäuse axial verstellbar ist, und
- der Halter im Bereich des Gehäuses von einer Buchse umgeben ist, die mit einem Außen- und einem Innengewinde gleichen Drehsinns, jedoch unterschiedlicher Steigung versehen ist und einerseits mit dem Halter und andererseits mit dem Gehäuse zusammenarbeitet.

2. Linearmodul nach Anspruch 1, **dadurch gekennzeichnet, daß** der linearwirkende Motor (3) ein Zylinder ist, der die Befestigungsplatten am äußeren Ende des bewegten inneren Vierkantrohres (2) einerseits und andererseits die gegenüberliegende Abschlußplatte des Führungsrohres (1) miteinander in Verbindung setzt und hydraulisch oder pneumatisch oder elektromechanisch angetrieben ist.

3. Linearmodul nach Anspruch 1 oder 2, **dadurch gekennzeichnet, daß** die Befestigung des Zylinders (3) innerhalb des bewegten Inneren des Vierkantrohres (2) und/oder innerhalb des Führungsrohres (1) koaxial zur Bewegungsrichtung des inneren Rohres (2) verschiebbar und kraftschlüssig zu dem inneren Rohr (2) und/oder dem äußeren Rohr (1) feststellbar ist.

4. Linearmodul nach einem der vorhergehenden Ansprüche, **dadurch gekennzeichnet, daß** im Inneren der beiden Rohre (1,2) koaxial hintereinander mehrere der linearwirkenden Motore (3), die individuell ansteuerbar sind, angeordnet sind.

5. Linearmodul nach einem der vorhergehenden Ansprüche, **dadurch gekennzeichnet, daß** der oder die Befestigungspunkte des linearwirkenden Motors (3) am Führungsrohr (1) und/oder am beweglichen zweiten Rohr (2) koaxial verschieb- und feststellbar angeordnet ist/sind.

6. Linearmodul nach einem der Ansprüche 3 oder 5, **dadurch gekennzeichnet, daß** der Halter an der Stirnseite des Führungsrohres durch das Gehäuse geführt ist.

## Claims

1. Linear module consisting of a guide tube (1) designed as a rectangular tube and a second tube (2), which is arranged so as to be coaxially movable in said guide tube (1) and is also designed as a rectangular tube (2), the inner rectangular tube (2) being connected to a linear-acting motor (3), which exerts forces which act on the inner tube (2) coaxially to the common axis of the two tubes (1,2), the inner, moving tube (2) being mounted on the outer guide tube (1), the guide rails of the mounts being fastened so as to be three-dimensionally adjustable for setting of the mounts, **characterised in that**
- in the interior of the moving tube (2) or of the guide tube (1), sensors (position encoders) are located (4), by means of which the relative coaxial position of the tubes (1, 2) is signalled to a control unit (5) and/or can be interrogated from this control unit (5).
- the motor, in particular the cylinder (3), is rigidly connected at one end to a holder, which is secured against rotation and axially adjustable relative to the housing, and
- the holder is surrounded in the vicinity of the housing by a bush, which is provided with an external screw thread and an internal screw thread of the same direction of rotation but different pitch, and cooperates with the holder on the one hand and with the housing on the other hand.

2. Linear module according to claim 1, **characterised in that** the linear-acting motor (3) is a cylinder which puts the fastening plates on the outer end of the moving inner rectangular tube (1) on the one hand and the opposing connection plate of the guide tube (1) on the other hand into connection with one another, and is hydraulically or pneumatically or electromechanically driven.

3. Linear module according to claim 1 or 2, **characterised in that** the fastening of the cylinder (3) within the moving interior of the rectangular tube (2) and/or within the guide tube (1) is displaceable and can be frictionally locked on the inner tube (2) and/or on the outer tube (1)

4. Linear module according to one of the preceding claims, **characterised in that** a plurality of the linear-acting motors (3) are disposed coaxially one behind the other in the interior of the two tubes (1,2) and are actuatable individually.

5. Linear module according to one of the preceding claims, **characterised in that** the fastening point or fastening points of the linear-acting motor (3) on the guide tube (1) and/or on the moving second tube (2) is/are disposed so as to be coaxially displaceable and fixable.

6. Linear module according to one of claims 3 or 5, **characterised in that** the holder on the end face of the guide tube is guided by means of the housing.

## Revendications

1. Module linéaire composé d'un tube de guidage (1) se présentant sous forme de tube de section rectangulaire, et d'un deuxième tube (2) se présentant également sous forme de tube de section rectangulaire, le tube à section rectangulaire intérieur (2) étant relié au moteur linéaire (3) qui exerce des forces coaxiales par rapport à l'axe des deux tubes (1, 2) sur le tube intérieur (2), le tube intérieur (2) qui se déplace, étant monté sur paliers dans le tube de guidage extérieur (1), et la fixation des rails de guidage étant réglable afin de pouvoir ajuster les paliers, **caractérisé en ce que**
- des détecteurs (capteurs de déplacement) sont situés à l'intérieur du tube qui se déplace (2) ou du tube de guidage (1), pour pouvoir transmettre la position coaxiale relative des tubes (1,2) à l'unité de commande (5) et/ou inversement, l'interroger depuis l'unité de commande (5),
- le moteur, notamment le vérin (3) est relié à un support par un assemblage rigide à l'une des extrémités, le support ne pouvant pas tourner et étant réglable dans le sens axial par rapport au boîtier, et
- le support est entouré d'une douille au niveau du boîtier, cette douille étant pourvue d'un filetage extérieur et d'un filetage intérieur de même sens, mais de pas différents, et fonctionnant d'une part avec le support, et d'autre part, avec le boîtier.

2. Module linéaire selon la revendication 1, **caractérisé en ce que** le moteur linéaire (3) est un vérin qui relie les plaques de fixation situées à l'extrémité du tube intérieur à section rectangulaire (2) d'un côté, à la plaque à l'extrémité du tube de guidage (1) de l'autre côté, et est commandé par voie hydraulique, pneumatique ou électromagnétique.

3. Module linéaire selon la revendication 1 ou 2, **caractérisé en ce que** la fixation du vérin (3) à l'intérieur du tube intérieur de section rectangulaire (2) et/ou à l'intérieur du tube de guidage (1) peut se déplacer coaxialement dans le sens de déplacement du tube intérieur (2) et peut être fixée par adhérence au tube intérieur (2) et/ou au tube extérieur (1).

4. Module linéaire selon l'une des revendications précédentes, **caractérisé en ce que** plusieurs moteurs linéaires (3), à commandé individuelle, sont placés coaxialement les uns derrière les autres, à l'intérieur des deux tubes (1,2).

5. Module linéaire selon l'une des revendications précédentes, **caractérisé en ce que** le ou les point(s) de fixation du moteur linéaire (3) sur le tube de guidage (1) et/ou sur le deuxième tube déplaçable (2) est/sont prédéfini(s) ou réglable(s).

6. Module linéaire selon l'une des revendications 3 ou 5, **caractérisé en ce que** le support sur la face frontale du tube de guidage passe dans le boîtier.
